# EUROPÄISCHE PATENTSCHRIFT

(11) **EP 4 004 416 B1**
(45) Veröffentlichungstag und Bekanntmachung des Hinweises auf die Patenterteilung: **19.10.2022**
(21) Anmeldenummer: 21730153.0
(22) Anmeldetag: 27.05.2021
(51) Int. Cl.: F16K 37/00

(54) **PRÜFEN DER FUNKTIONSFÄHIGKEIT EINES SICHERHEITSVENTILS FÜR EINEN SICHERHEITSFALL**
TESTING THE FUNCTIONALITY OF A SAFETY VALVE FOR AN EMERGENCY SITUATION
VÉRIFICATION DE L'APTITUDE AU FONCTIONNEMENT D'UNE SOUPAPE DE SÉCURITÉ POUR UN CAS D'URGENCE

(30) Priorität: 02.06.2020 DE 102020114879
(43) Veröffentlichungstag der Anmeldung: 01.06.2022
(60) Teilanmeldung: 22191806.3
(73) Patentinhaber: Samson Aktiengesellschaft, 60314 Frankfurt am Main (DE)
(72) Erfinder: WAGNER-STÜRZ, David, 64367 Mühltal (DE)
(74) Vertreter: Köllner & Partner mbB
(86) Internationale Anmeldenummer: PCT/EP2021/064246
(87) Internationale Veröffentlichungsnummer: WO 2021/244945

(56) Entgegenhaltungen:
- WO-A1-2018/075321
- DE-A1- 4 218 320
- DE-A1-102018 109 865
- US-A1- 2006 219 299
- US-A1- 2020 124 063

## Beschreibung

### Gebiet der Erfindung

Die Erfindung betrifft ein Verfahren zum Prüfen der Funktionsfähigkeit eines Sicherheitsventils, sowie eines Magnetventils zum Auslösen eines Sicherheitsventils, sowie eine entsprechende Vorrichtung. Derartige Verfahren dienen dazu, die Betriebssicherheit einer Anlage dadurch zu gewährleisten, dass sichergestellt wird, dass ein Sicherheitsventil im Sicherheitsfall auch auslöst.

Sicherheitsstellventile oder Sicherheitsarmaturen bestehen meist aus einem pneumatischen Antrieb und einem im Ventil beweglichen Ventilglied. Sie dienen zum Regulieren eines Fluidstromes. Die Antriebsstange des Ventilglieds wird in der Regel durch ein fluiddichtes Gehäuse oder einen Deckel nach außen geführt. Eine Dichtung dichtet die Antriebsstange nach außen ab. Außerhalb befindet sich ein Antrieb, welcher auf die Antriebsstange wirkt und das Ventilglied bewegt. Als Antrieb zum Bewegen der Antriebsstange dienen typischerweise fluidische Antriebe (in der Regel pneumatische). Die Art der Ventile können sowohl Drehventile als auch Hubventile sein.

Sicherheitsarmaturen besitzen einen Sicherheitsschaltkreis, welcher dafür sorgt, dass das Ventilglied in einem Sicherheitsfall in eine sichere Position verfährt. Diese sichere Position kann entweder die Offenstellung oder die Geschlossenstellung sein. Da in der Regel die pneumatischen Antriebe einfach wirkend ausgelegt sind und somit in eine der Stellungen mittels Federspeicher verfahren, muss lediglich der Antrieb entlüftet werden, damit er das Ventilglied in die sichere Position verfährt.

Ein einfacher Sicherheitsschaltkreis besitzt ein Magnetventil zum schnellen Entlüften des Antriebs im Sicherheitsfall. Bei unbestromter Magnetspule verfährt der Anker dieses Magnetventils mittels einer Feder in eine offene Position, die den Antrieb des Sicherheitsventils mit der Atmosphäre verbindet, so dass dieser vollständig entlüften kann. Derartige Magnetventile besitzen meist einen sehr großen Durchlass, damit der Druck aus dem Antrieb des Sicherheitsventils möglichst schnell entweichen kann und das Sicherheitsventil möglichst schnell in die sichere Position verfährt. Der Sicherheitsschaltkreis ist von allen anderen Schaltkreisen vollständig getrennt und muss bestimmten Anforderungen genügen, welche z.B. in der SIL (*Safety Integrity Level* = Sicherheitsanforderungsstufe) der Anlage beschrieben sind. Die verschiedenen SIL sind in der EN 61508 definiert.

Sicherheitsventile können auch eine Regelfunktion haben. Dann besitzen sie zusätzlich Stellungsregler, um auch Zwischenpositionen des Stellgliedes einregeln zu können. Die Regelkreise hierfür sind von denen der Sicherheitskreise getrennt ausgeführt. Die Stellungsregler bekommen die Schaltsignale von einer Leitwarte und die Druckluftversorgung wird derart verschaltet, dass im Sicherheitsfall der Sicherheitskreis nicht beeinträchtigt wird. Die Stellungsregler kommen auch dann zum Einsatz, wenn bei Sicherheitsventilen die Funktionsfähigkeit des Sicherheitskreises zyklisch getestet werden soll, beispielsweise durch einen Teilhubtest. Auf/Zu-Stellarmaturen neigen dazu, zu verkleben, wenn das Ventilglied lange in einer Stellung verbleibt bzw. gehalten wird. Die erhöhte Haftreibung verlangt dem Antrieb in solchen Fällen oft große Kräfte ab. Bei pneumatischen Antrieben wird also ein entsprechend höherer Druck benötigt, um das Ventilglied gegen die Haftreibung loszureißen bzw. loszubrechen.

Bei Sicherheitsventilen ist das Ventil im normalen Betrieb häufig offen, und im Sicherheitsfall (z.B. Stromausfall) schließt das Ventil selbsttätig. Die Druckluft wirkt immer gegen die Federkraft, mit der der Antrieb vorgespannt wurde. Wird der Antrieb entlüftet, beginnt das Ventil, sich zu schließen, sobald die Federkräfte das Ventilglied gegen die ggf. vorhandene Haftreibung losgerissen haben. Der umgekehrte Fall, bei dem die Sicherheitsstellung offen ist (stromlos, Antrieb entlüftet) und die Betriebsstellung geschlossen (bestromt, Antrieb belüftet), kommt ebenfalls vor.

### Stand der Technik

Um den sicheren Betrieb eines Sicherheitsventils bzw. einer Sicherheitsarmatur zu gewährleisten, wird in vielen Fällen nach einer gewissen Zeit (z.B. zyklisch oder in festen Zeitintervallen) getestet, ob sich das Ventilglied vollständig in die Sicherheitsstellung bewegen lässt. Ein solcher sogenannter Vollhubtest weist die Funktionsfähigkeit eines Sicherheitsventils in vollem Umfang nach. Er erfordert jedoch in den meisten Fällen eine Unterbrechung des laufenden Betriebs einer Anlage und ist daher in der Regel mit hohem Aufwand und Kosten verbunden.

Um im laufenden Betrieb ohne eine Unterbrechung der Arbeitsprozesse die Funktionsfähigkeit eines Sicherheitsventils überprüfen zu können, werden sogenannte Partial-Stroke-Tests (PST) bzw. Teilhubtests durchgeführt. Diese sind z.B. in den Druckschriften DE 197 23 650 A1, WO 2009/013205 A1 oder DE 10 2018 103 324 B3 beschrieben. Das Ventilglied wird dabei nur einen Teil der Strecke hin zur Sicherheitsstellung verfahren, insbesondere nur so weit, dass der Prozess der Anlage nicht maßgeblich beeinflusst oder gestört wird. Teilhubtests können somit im laufenden Betrieb durchgeführt werden. Sie erlauben Rückschlüsse auf die grundlegende Bewegbarkeit des Ventilglieds und des Antriebs, zumindest im Rahmen der dabei ausgeführten Hubbewegung. Um solche Teilhubtests durchführen zu können, werden ebenfalls Stellungsregler benötigt. Diese Stellungsregler haben meist einen geringeren Durchlass für das Antriebsfluid als das Magnetventil. Zudem kann dieser Durchlass sehr feinfühlig reguliert werden, so dass es möglich ist, dass auch das Ventilglied nur sehr kleine Wege zurücklegt, so, wie es bei einem Teilhubtest benötigt wird. Zum Durchführen solch feiner Bewegungen werden Stellungsregler mit I/P-Wandlern benötigt, welche eine ebenso feinauflösende Wegsensorik besitzen müssen.

Ein weiterer Vorteil eines intelligenten Sicherheitsventils mit Stellungsregler gegenüber einem Sicherheitsventil mit lediglich einem Magnetventil ist, dass die Positions-Daten und auch Druck-Daten mittels der Sensoren, Speicherbausteine und Prozessoren des Stellungsreglers aufgezeichnet und ggf. statistisch ausgewertet werden können. Dieses Aufzeichnen ist von Bedeutung, um Nachweise zum sicheren Betrieb des Sicherheitsventils und seines Sicherheitsschaltkreises zu führen. Ein Sicherheitsstellventil besitzt aus den genannten Gründen häufig sowohl ein Magnetventil als auch einen Stellungsregler. Im Sicherheitsfall kann dann aber nicht mit hoher Sicherheit darauf geschlossen werden, ob das Magnetventil oder der Stellungsregler das Entlüften des Antriebes und dadurch das Verfahren des Stellgliedes in die sichere Position herbeigeführt haben.

Sicherheitsventile müssen (z.B. in der chemischen Industrie) regelmäßig auf ihre Funktionsfähigkeit überprüft werden. Um die Funktionsfähigkeit eines Sicherheitsventils gewährleisten zu können, müssen sowohl das Magnetventil, das zum Auslösen des Sicherheitsventils dient, als auch das eigentliche Sicherheitsventil zuverlässig arbeiten. Ein Teil der Überprüfung der Funktionsfähigkeit eines Sicherheitsventils wird mittels Teilhubtest (Partial-Stroke-Test, PST) durchgeführt. Dabei wird das Ventilglied bei laufender Anlage um ca. 10 bis 15% seines möglichen Hubs bewegt. Dadurch wird der Betrieb der Anlage nicht wesentlich beeinträchtigt, aber die Beweglichkeit des Ventilgliedes nachgewiesen. Die häufigsten Fehler können so ausgeschlossen werden. Durch diesen Test wird allerdings nur die Funktionsfähigkeit des Antriebs des Ventilglieds bestimmt; ein Teilhubtest ist nicht geeignet, die Funktion eines Magnetventils zu überprüfen, das zum Auslösen des Sicherheitsventils dient.

In der Veröffentlichung EP 2 473 889 B1 wird ein Ventilsystem beschrieben, welches einen Ventilaktuator, eine Ventilsteuerung (Stellungsregler) und ein Sicherheitsmagnetventil besitzt. Zudem wird beschrieben, wie ein Test (z.B. PST) gestartet wird und wie Diagnosedaten, z.B. Positionsdaten oder Drucksensorsignale, ausgegeben werden, um einen Status anzuzeigen.

Auch die Veröffentlichung US 2020/0124063 A1 befasst sich primär mit einem Partial Valve Stroke Test (PVST) an einem Sicherheitsventil, wobei eine Steuerung angegeben wird, die ermöglicht, dass das Magnetventil einen solchen PVST am Sicherheitsventil steuert.

Die Druckschriften WO 2018/075321 A1 und WO 2018/075241 A1 beschreiben Verfahren und Vorrichtungen zum Testen eines Magnetventils mit Hilfe eines Stellungsreglers. Dabei dient das Magnetventil zum Auslösen eines Sicherheitsventils.

Die Druckschrift US 2006/0219299 A1 beschreibt einen vielseitigen Controller für Sicherheitsventile, der auch Funktionen zum Testen bereitstellt. Um das Magnetventil zu testen, wird es sehr kurzzeitig aktiviert. Dadurch soll es möglich sein, das Magnetventil zu testen, ohne dass dabei das Ventilglied des Sicherheitsventils bis in die Sicherheitsstellung verfährt.

In den genannten Veröffentlichungen werden die Funktionalitäten des Magnetventils und des Stellungsreglers beschrieben und Verfahren dargestellt, bei denen Sensordaten aus einem Test des Stellventils oder des Magnetventils bewertet und ausgegeben werden können. Mit den beschriebenen Verfahren kann jedoch nicht darauf geschlossen werden, ob nach dem Eintritt eines Sicherheitsfalles und dem Verfahren des Ventilgliedes in die Sicherheitsstellung der Sicherheitskreis mit dem Magnetventil oder der Stellungsregler das Verfahren des Ventilgliedes in die Sicherheitsstellung bewirkt hat. Solche Aussagen sind jedoch wichtig, denn ein solcher Sicherheitsfall könnte die Rolle eines betriebsbedingten Vollhubtests erfüllen, und somit eine Aussage über die Funktionsfähigkeit des Magnetventils liefern. Könnte man solche Aussagen zuverlässig treffen, würden sich die Wartungsintervalle eines solchen Sicherheitsventils mit Sicherheitsschaltkreis verlängern.

In der Veröffentlichung DE 10 2018 109 865 wird ein Verfahren zum Überwachen der Funktion eines Stellventils beschrieben. Hierbei geht es vor allem um das Auftreten von Kavitation und/oder auf das Stellventil wirkenden Fluidschlägen. Die Überwachung wird dadurch erreicht, dass eine Betriebsgeschwindigkeit des Stellventils ermittelt und mit einer Referenzgeschwindigkeit verglichen wird. Auf den Nachweis der Funktionsfähigkeit eines Sicherheitsventils, insbesondere in Verbindung mit einem Magnetventil, das das Sicherheitsventil auslöst, wird nicht eingegangen.

### Aufgabe

Aufgabe der Erfindung ist es, Verfahren und Vorrichtungen anzugeben, die sichere Aussagen darüber ermöglichen, ob bei einem eingetretenen Sicherheitsfall ein Sicherheitsventil und insbesondere das Magnetventil zum Auslösen des Sicherheitsventils ordnungsgemäß funktioniert haben.

### Lösung

Diese Aufgabe wird durch den Gegenstand des unabhängigen Verfahrensanspruches gelöst. Weitere unabhängige Ansprüche beziehen sich auf einen entsprechenden Stellungsregler eines Sicherheitsventils, ein entsprechendes Computerprogramm und ein computerlesbares Medium, auf dem das Computerprogramm gespeichert ist. Vorteilhafte Weiterbildungen des Gegenstandes der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zum Prüfen der Funktionsfähigkeit eines Sicherheitsventils in einem Sicherheitsfall vorgeschlagen. Das Sicherheitsventil hat ein Ventilglied, und einen einfachwirkenden, pneumatischen Antrieb mit einem Antriebsfluid, sowie einen Stellungsregler, der den Druck im Antriebsfluid einstellt und dadurch die Position des Ventilglieds steuert und/oder regelt. Das Ventilglied nimmt eine Sicherheitsstellung ein, wenn der Druck im Antriebsfluid einem Umgebungsdruck entspricht. Ein Magnetventil ist zwischen dem Antrieb und dem Stellungsregler pneumatisch verschaltet und dient zum Entlüften des Antriebs zur Umgebung hin. Außerdem wird ein erster Drucksensor bereitgestellt, der den Druck des Antriebsfluids zwischen dem Stellungsregler und dem Magnetventil misst. Dieser erste Drucksensor ist in der Regel in den Stellungsregler integriert. In einem Sicherheitsfall entlüften sowohl das Magnetventil als auch der Stellungsregler den Antrieb. Das Verfahren umfasst dabei die folgenden Schritte:
- Der Sicherheitsfall wird ausgelöst, infolgedessen das Ventilglied in seine Sicherheitsstellung verfahren sollte.
- Der Zeitpunkt, an dem das Ventilglied die Sicherheitsstellung eingenommen hat, wird ermittelt.
- Zu diesem Zeitpunkt misst der erste Drucksensor einen Restdruck im Antriebsfluid.
- Ist der Restdruck höher als eine erste Schwelle oder gleich der ersten Schwelle, dann gilt die Prüfung der Funktionsfähigkeit des Sicherheitsventils als nicht bestanden.
- Ist der Restdruck niedriger als die erste Schwelle, dann gilt die Prüfung der Funktionsfähigkeit des Sicherheitsventils als bestanden.

Bei diesem Verfahren misst der erste Drucksensor den Druck zwischen dem Stellungsregler und dem Magnetventil. Falls alles ordnungsgemäß funktioniert, entlüftet das Magnetventil im Sicherheitsfall den Antrieb. Gleichzeitig steuert oder regelt der Stellungsregler so, dass der Antrieb über die entsprechende Leitung entlüftet wird. An der Stelle, an der der Drucksensor den Druck misst, wird also nur gemessen, wie der kurze und insbesondere kleinvolumige Leitungsabschnitt vom Stellungsregler zum Magnetventil entlüftet wird. Der Druck dort gleicht sich also schnell und insbesondere vollständig dem Umgebungsdruck an, es sollte bei Erreichen der Sicherheitsstellung kein Restdruck gemessen werden.

Wird hingegen ein Restdruck gemessen, der eine erste Schwelle überschreitet, hat entweder der Stellungsregler oder das Magnetventil nicht korrekt funktioniert. Der Fall, dass beide nicht korrekt funktionieren, wird dadurch ausgeschlossen, dass das Ventilglied in Folge des Sicherheitsfalles ja die Sicherheitsstellung eingenommen hat.

Auf diese Weise lässt sich ohne zusätzlichen Aufwand feststellen, ob das Sicherheitsventil in Folge des Auslösens eines Sicherheitsfalles korrekt funktioniert hat oder nicht. Mit einem solchen Verfahren können die Wartungsintervalle für Anlagen mit Sicherheitsventilen gegebenenfalls optimaler gestaltet werden. Insbesondere lassen sich die Wartungsfristen unter Umständen verlängern, wenn nachgewiesen wurde, dass sowohl das Magnetventil als auch der Stellungsregler ordnungsgemäß funktioniert haben. Wenn der Betreiber der Anlage z.B. wüsste, dass die Armatur über das Magnetventil verfahren wurde, könnte er den eingetretenen Sicherheitsfall als Funktionstest betrachten. Damit ließe sich nachweisen, dass der Sicherheitsschaltkreis voll funktionsfähig ist.

Bei einer bevorzugten Weiterbildung des Verfahrens herrscht im Antrieb des Sicherheitsventils vor dem Sicherheitsfall ein Ausgangsdruck. Der Restdruck ist höher als die erste Schwelle oder gleich der ersten Schwelle, so dass die Prüfung der Funktionsfähigkeit des Sicherheitsventils nicht bestanden ist. Es wird auf einen Defekt des Magnetventils geschlossen, wenn der Restdruck niedriger als eine zweite Schwelle liegt, welche größer als die erste Schwelle und kleiner als der Ausgangsdruck ist, andernfalls wird auf einen Defekt des Stellungsreglers geschlossen.

Als erste Schwelle kann z.B. die Hälfte des Restdrucks verwendet werden, der am ersten Drucksensor typischerweise gemessen wird, wenn das Ventilglied durch den Stellungsregler in die Sicherheitsstellung gebracht wird. Dieser kann im Rahmen einer Kalibrationsmessung beim Einrichten der Anlage bestimmt werden. Bei einer solchen Kalibration wird der Antrieb über den Stellungsregler entlüftet, das Magnetventil bleibt in Betriebsstellung und entlüftet nicht. Das gesamte Luftvolumen des Antriebs und der Zuleitungen entweicht also durch diese Zuleitungen und den Stellungsregler, der in aller Regel einen deutlich niedrigeren Durchlass aufweist als das Magnetventil. Deshalb liegt bei Einnahme der Sicherheitsstellung noch ein Restdruck am ersten Drucksensor vor.

Als zweite Schwelle kann z.B. ein Druck gewählt werden, der mittig zwischen dem beschriebenen typischen Restdruck und dem Ausgangsdruck liegt.

Misst der erste Drucksensor einen Restdruck, der oberhalb dieser zweiten Schwelle liegt, also im Wesentlichen dem Ausgangsdruck entspricht, so liegt ein Defekt am Stellungsregler vor, da der Leitungsabschnitt, an dem sich der erste Drucksensor befindet, nicht ordnungsgemäß entlüftet wird. Das Magnetventil hat aber funktioniert, da die Sicherheitsstellung erreicht wurde. Liegt der Restdruck dagegen zwischen den beiden Schwellen, so erfolgte die Entlüftung des Antriebs über den Stellungsregler, woraus zu entnehmen ist, dass zwar der Stellungsregler, nicht aber das Magnetventil ordnungsgemäß funktioniert hat.

Diese Weiterbildung des Verfahrens ermöglicht also im Fehlerfall eine präzisere Aussage über die Ursache der Fehlfunktion.

Eine noch detailliertere Diagnose wird ermöglicht, wenn ein Verlauf der Position des Ventilglieds und/oder des Drucks erfasst wird, wodurch eine Positions- und/oder Druck- und/oder Positions-Druck-Kennlinie gebildet werden kann, und wenn die erhaltene Kennlinie mit mindestens einer gespeicherten Referenz-Kennline verglichen wird. Dadurch lassen sich ggf. Abweichungen vom normalen Verhalten bereits erkennen, bevor sie grundlegende Auswirkungen auf die Funktionsfähigkeit des Sicherheitsventils oder seiner Komponenten haben.

Auch dadurch, dass der zeitliche Verlauf des Drucks und/oder einer ersten und/oder zweiten Ableitung davon nach dem Auslösen des Sicherheitsfalles aufgezeichnet wird, und dass der aufgezeichnete zeitliche Verlauf des Drucks und/oder der ersten und/oder zweiten Ableitung davon mit einer vorab gespeicherten Referenz-Kennlinie verglichen wird, kann eine detailliertere Diagnose erreicht werden.

Vorzugsweise werden aus dem Vergleich des aufgezeichneten Verlaufs und/oder der mindestens einen erhaltenen Kennlinie mit der mindestens einen Referenz-Kennlinie Aussagen über die Funktionsfähigkeit von Komponenten des Sicherheitsventils gewonnen. Die unterschiedlichen Fälle lassen sich so ggf. leichter unterscheiden, da nicht nur einzelne Werte berücksichtigt werden, sondern die Form der erhaltenen Kennlinien.

Auf korrektes Funktionieren des Magnetventils kann geschlossen werden, wenn ein sehr schneller oder sogar schlagartiger Druckabfall des ersten Drucksensors und gleichzeitig ein langsamerer, kontinuierlicher Positionsverlauf erfasst wurden.

Dazu kann man wie folgt vorgehen: Es wird ein ersts Zeitintervall bestimmt, das der am ersten Drucksensor gemessene Druck benötigt, um auf Atmosphärendruck abzusinken. Ferner wird ein zweites Zeitintervall bestimmt, das das Ventilglied benötigt, um in die Sicherheitsstellung zu verfahren. Die Zeiten werden gemessen ab Auslösen des Sicherheitsfalls. Auf korrektes Funktionieren des Magnetventils wird geschlossen, wenn das erste Zeitintervall kürzer als das zweite Zeitintervall ist, denn dann erfolgt die Entlüftung des Antriebs über das Magnetventil, und die Entlüftung der Steuerleitung zwischen Stellungsregler und Magnetventil erfolgt über den Stellungsregler, was i.d.R. sehr schnell geht.

Auf einen Defekt des Magnetventils kann hingegen geschlossen werden, wenn das erste Zeitintervall länger als das zweite Zeitintervall ist.

Auf einen Defekt des Stellungsreglers kann geschlossen werden, wenn ein konstanter Druckverlauf am ersten Drucksensors und gleichzeitig ein kontinuierlicher Positionsverlauf des Ventilglieds zur Sicherheitsstellung hin erfasst wurden.

Noch genauer und detaillierter lässt sich das Verhalten des Sicherheitsventils auswerten, wenn ein zweiter Drucksensor bereitgestellt wird, der den Druck des Antriebsfluids zwischen dem Magnetventil und dem Antrieb des Sicherheitsventils misst. Dann kann aus einem schnellen, schlagartigen Druckabfall des ersten Drucksensors und gleichzeitig einem kontinuierlichen Druckabfall am zweiten Drucksensor auf ein korrektes Funktionieren der Komponenten des Sicherheitsventils geschlossen werden. Für eine solche Diagnose genügt es im Allgemeinen, wenn der Druckabfall am ersten Drucksensor schneller verläuft als der Druck-abfall am zweiten Drucksensor.

Wird ein zweiter Drucksensor bereitgestellt, der den Druck des Antriebsfluids zwischen dem Magnetventil und dem Antrieb des Sicherheitsventils misst, so kann aus einem schnellen, schlagartigen Druckabfall des ersten Drucksensors und gleichzeitig einem kontinuierlichen Druckabfall am zweiten Drucksensor und einem von einer Referenz-Positions-Kennlinie abweichenden Positionsverlauf auf einen Defekt des Antriebs des Sicherheitsventils geschlossen werden. Es wird insbesondere auf einen Defekt des Antriebs des Sicherheitsventils geschlossen, wenn der Druckabfall am ersten Drucksensor schneller verläuft als der Druckabfall am zweiten Drucksensor und die zeitliche Veränderung der Position des Ventilglieds von einer Referenz-Positions-Kennlinie abweicht. Bei den beobachteten Druckverläufen müsste das Ventilglied sich in der erwarteten Zeit in die Sicherheitsstellung begeben; kommt es dabei zu Verzögerungen, kann von einem mechanischen Problem im Umfeld des Antriebs des Ventilglieds ausgegangen werden.

Die Aufgabe wird zudem dadurch gelöst, dass bei einem Verfahren, wie es weiter oben beschrieben wurde, die Verfahrensschritte als Programmcode formuliert sind, mit dem das Verfahren auf mindestens einem Computer ablaufen kann.

Die Aufgabe wird des Weiteren gelöst durch einen Stellungsregler eines Sicherheitsventils, der Mittel zur Datenaufzeichnung sowie eine Steuerung aufweist, die derart ausgebildet sind, dass der Stellungsregler die Funktionsfähigkeit des Sicherheitsventils und/oder des Magnetventils mithilfe eines Verfahrens, wie es weiter oben beschrieben wurde, überprüfen kann.

Zudem wird die Aufgabe gelöst durch ein Sicherheitsventil mit einem solchen Stellungsregler.

Die Aufgabe wird auch gelöst durch eine prozesstechnische Anlage mit einem solchen Sicherheitsventil.

Ferner wird die Aufgabe gelöst durch ein Computerprogramm, umfassend Befehle, die bewirken, dass der vorgenannte Stellungsregler die Verfahrensschritte nach einem der weiter oben beschriebenen Verfahren ausführt.

Außerdem wird die Aufgabe gelöst durch ein computerlesbares Medium, auf dem das vorgenannte Computerprogramm gespeichert ist.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine schematische Darstellung eines Sicherheitsventils mit Magnetventil und Stellungsregler, bei dem ein erfindungsgemäßes Verfahren zum Einsatz kommen kann;
- Fig. 2: ein Diagramm, das den zeitlichen Verlauf des Ventilhubs im Sicherheitsfall darstellt, sowohl für den Fall, dass das Magnetventil geschaltet hat, als auch für den Fall, dass der Stellungsregler das Einnehmen der Sicherheitsstellung herbeigeführt hat (nicht Teil der beanspruchten Erfindung);
- Fig. 3: ein Diagramm, das den zeitlichen Verlauf des Ventilhubs im Sicherheitsfall darstellt, wenn eine zusätzliche Verzögerung, die eine Unterscheidung bei ähnlichen Durchflüssen ermöglicht, vorhanden ist (nicht Teil der beanspruchten Erfindung);
- Fig. 4: ein Diagramm, das zusätzlich zum Hubverlauf den Druckverlauf am ersten Drucksensor im Sicherheitsfall darstellt; und
- Fig. 5: ein Diagramm, das die zugehörigen Hub-Druck-Kennlinien darstellt, die im Sicherheitsfall erhalten werden.

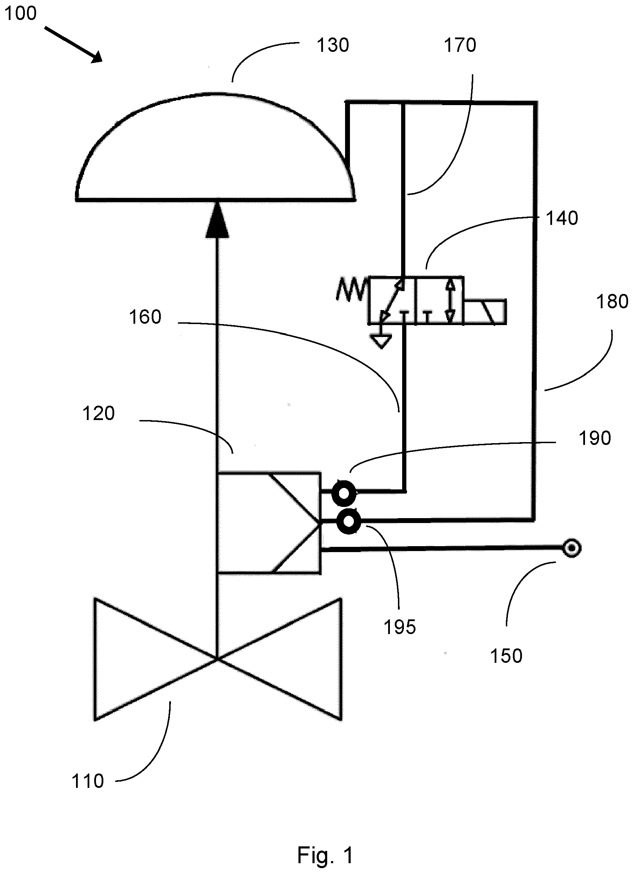

In Fig. 1 ist der schematische Aufbau eines typischen Sicherheitsventils 100 dargestellt. Dazu gehört das eigentliche Ventil 110 mit dem Ventilglied, ein Stellungsregler 120 und ein pneumatischer Antrieb 130, der das Ventilglied betätigt. Die Druckverhältnisse im Antrieb werden durch das Magnetventil 140 und den Stellungsregler 120 gesteuert. Die Druckluftversorgung des Stellungsreglers erfolgt durch eine Zuluftleitung 150.

Das Magnetventil wird im Normalbetrieb bestromt (die Stromversorgung ist nicht gezeichnet). Wird die Stromversorgung des Magnetventils 140 unterbrochen, schaltet es in seine Sicherheitsstellung und gibt eine Verbindung vom Antrieb zur Atmosphäre frei, wodurch der Druck im Antrieb auf Umgebungsdruck absinkt und das Ventil 110 in die Sicherheitsstellung verfahren wird.

Dieser Zustand ist in der schematischen Darstellung von Fig. 1 zu sehen: die linke Ventilstellung ist aktiv, in der die Steuerleitung 160, 170 zwischen dem Stellungsregler 120 und Antrieb 130 unterbrochen ist und stattdessen eine Verbindung des Antriebs zur Atmosphäre geschaltet ist, angedeutet durch den Pfeil links unten am Magnetventil 140. Wäre das Magnetventil 140 in seiner Betriebsposition, wäre die rechte Hälfte aktiv, die die Steuerleitung 160, 170 zwischen Stellungsregler 120 und Antrieb 130 freigibt.

In der dargestellten Ausführung ist in der Sicherheitsstellung des Magnetventils die vom Stellungsregler 120 zum Magnetventil 140 verlaufende Steuerleitung 160 im Magnetventil verblockt (durch die ,T'-förmige Darstellung angedeutet).

Der Stellungsregler 120 ist an dem Sicherheitsventil 100 montiert und regelt die Hubposition des Ventilglieds sowie den Druck im Antrieb. Der Antrieb 130 wird mit dem Stellungsregler 120 über die Steueranschlussleitung 160, 170 verbunden. An dem Anschluss dieser Leitung an den Stellungsregler sitzt ein erster Drucksensor 190, der insbesondere den Druck im Abschnitt 160 der Steuerleitung zwischen Stellungsregler 120 und Magnetventil 140 misst. Zwischen dem Magnetventil 140 und dem Antrieb 130 wird der Druck ferner über die Messleitung 180 auf den Messanschluss des Stellungsreglers 120 mit dem zweiten Drucksensor 195 geführt. Dieser misst also insbesondere den Druck im Abschnitt 170 der Steuerleitung zwischen Magnetventil 140 und Antrieb 130 und damit den Druck im Antrieb.

Der Stellungsregler 120 ist je nach konkretem Anwendungsfall für das Sicherheitsventil 100 für den Regelbetrieb und/oder für Diagnose-Funktionalitäten zuständig (z.B. für Teilhubtests). Das Magnetventil 140 übernimmt die eigentliche Sicherheitsfunktion. Deshalb hat dieses in der Regel auch einen größeren Kvs-Wert als der Stellungsregler, da an die Stellzeiten (Not-Reaktions-Dauer, d.h. wie schnell das Ventilglied im Sicherheitsfall in die Sicherheitsstellung gelangt) höhere Anforderungen gestellt werden. Es werden also kürzere Entlüftungszeiten und damit schnellere Bewegungen des Ventilglieds 110 gefordert.

Kommt es in der Anlage zu einem Sicherheitsfall, bekommen sowohl der Stellungsregler 120 als auch das Magnetventil 140 kein Stromsignal mehr bzw. ein deutlich niedrigeres Stromsignal als für den normalen Betrieb (typischerweise liegen am Magnetventil dann 0 V Spannung an, und der Stellungsregler wird noch mit 3,75 mA bestromt). Als Folge davon schalten beide Komponenten so, dass der Antrieb 130 entlüftet wird.

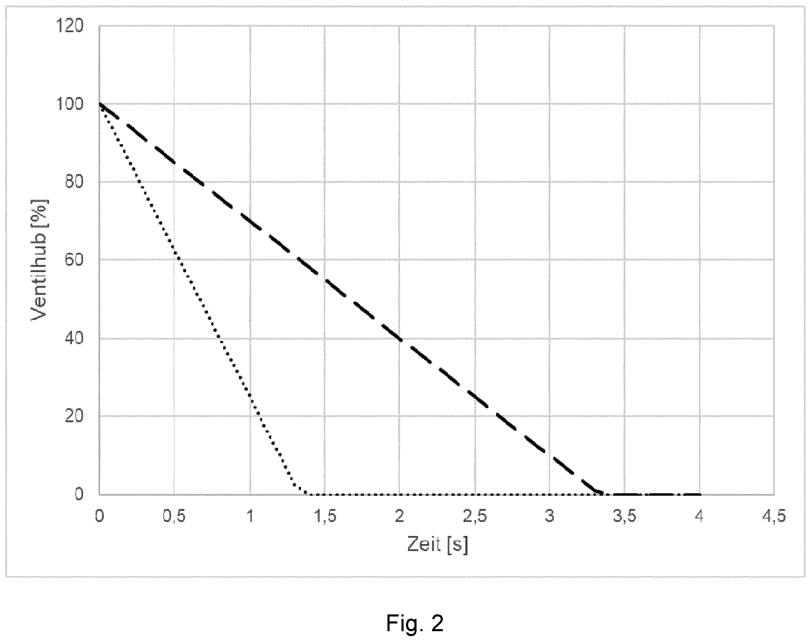

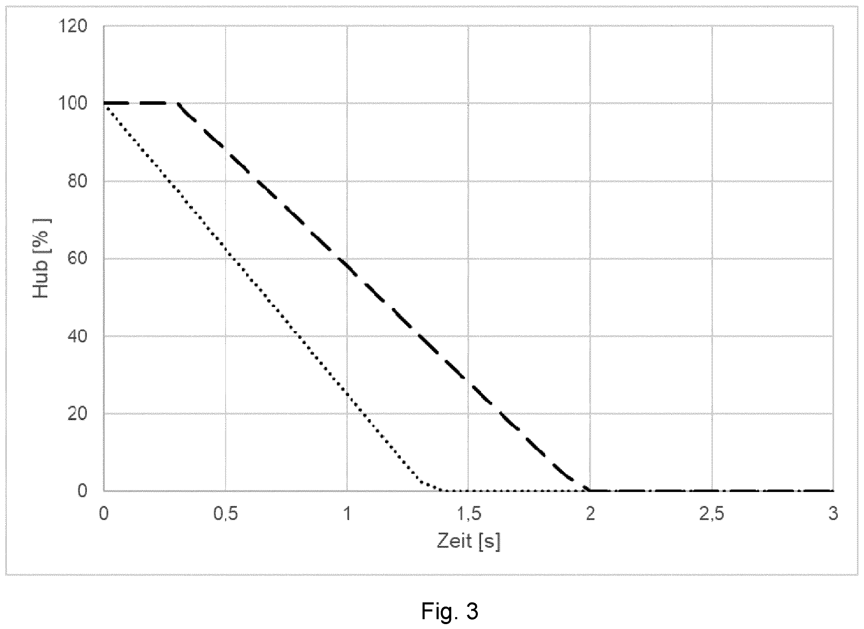

Die folgenden beiden Beispiel (Fig. 2 und Fig. 3) sind nicht Teil der beanspruchten Erfindung, erleichtern aber deren Verständnis. Ohne Drucksensoren 190, 195, also lediglich mittels der Positionserkennung des Stellungsreglers 120, ist ein Funktionsnachweis für das Magnetventil 140 über die Zeit, die zum Einnehmen der Sicherheitsstellung benötigt wird, möglich. Dies lässt sich an den Hub-Zeit-Kurven aus dem Diagramm in Fig. 2 erkennen. Da das Magnetventil 140 in aller Regel einen deutlich größeren Kvs-Wert, also einen deutlich höheren maximalen Durchfluss als der Stellungsregler 120 hat, entlüftet der Antrieb 130 über das Magnetventil 140 deutlich schneller als über den Stellungsregler 120.

Es ergeben sich die Verläufe, die in Fig. 2 dargestellt sind: Die gestrichelte Kurve gibt den Hub-Zeit-Verlauf an, der auftritt, wenn der Stellungsregler das Ventilglied in die Sicherheitsstellung bringt, während die gepunktete Kurve den Hub-Zeit-Verlauf angibt, der auftritt, wenn das Magnetventil den Antrieb entlüftet. Anhand des Zeitunterschiedes kann darauf rückgeschlossen werden, ob der Stellungsregler oder das Magnetventil das Ventilglied im Sicherheitsfall in die Sicherheitsstellung gebracht hat. Dabei kann die Kurve für den Stellungsregler im Rahmen einer Kalibrationsmessung bestimmt und als Referenzkurve gespeichert werden. Auch die typische Zeitdauer für diesen Vorgang kann auf diese Weise bestimmt werden. Für Diagnosezwecke ist es allerdings günstiger, wenn ein Referenzwert festgelegt wird, der zwischen den zu erwartenden Zeitdauern für das Verfahren des Ventilglieds mittels Stellungsregler und mittels Magnetventil liegt. Dann kann anhand eines Vergleichs mit diesem Referenzwert eine Fallunterscheidung getroffen werden.

Bei erhöhten Sicherheitsanforderungen kann als Referenzwert beispielsweise auch die erwartete maximale Dauer für das Verfahren mittels Magnetventil gewählt werden. In der Situation von Fig. 2 wäre das z.B. 1,5 Sekunden.

Für den weniger häufigen Fall, dass Stellungsregler 120 und Magnetventil 140 ähnliche Kvs-Werte aufweisen, fällt die soeben beschriebene Unterscheidung schwer, da die Kurven in Fig. 2 sehr nahe beieinanderliegen würden. In dieser Situation ist es vorteilhaft, wenn der Stellungsregler 120 so konfiguriert wird, dass er mit einer kleinen Verzögerung (von z.B. 0,3 s) schaltet. Diese Situation ist im Diagramm von Fig. 3 dargestellt. Wie in Fig. 2 stellt die gestrichelte Kurve den Hub-Verlauf dar, der auftritt, wenn der Stellungsregler das Ventilglied in die Sicherheitsstellung bringt.

Die gepunktete Kurve stellt wiederum den Hub-Verlauf dar, der auftritt, wenn das Magnetventil den Antrieb entlüftet. Durch die Verzögerung bedingt, liegen die Hub-Zeit-Kurven wieder weiter auseinander. Insbesondere ergibt sich eine Zeitdifferenz für die möglichen Entlüftungsvorgänge, die mindestens der gewählten Verzögerung entspricht. Es ist daher aufgrund der eingefügten Verzögerung möglich, die beiden Fälle wie beschrieben auseinanderzuhalten. Dies schließt die Besprechung der nicht beanspruchten Beispiele ab.

Ist ein erster Drucksensor 190 vorhanden, der den Druck in der Steuerleitung 160 zwischen Stellungsregler 120 und Magnetventil 140 misst, lassen sich differenziertere Aussagen darüber treffen, ob das Sicherheitsventil 100 bei einem Sicherheitsfall ordnungsgemäß funktioniert hat. Insbesondere lassen sich Aussagen darüber treffen, welche Komponenten ggf. nicht funktioniert haben.

Im störungsfreien Betrieb gelangt die Druckluft aus dem Stellungsregler 120 durch die Steuerleitung 160, das Magnetventil 140 und die Steuerleitung 170 in den Antrieb 130. In diesem Fall ist das Magnetventil auf Durchgang geschaltet (bestromt). Die Hub-Position des Ventilgliedes 110 wird in dieser Situation mittels des Stellungsreglers 120 eingeregelt. Zum Einregeln der Position besitzt der Stellungsregler ein Positionsmesssystem, welches die Position des Ventilgliedes abgreift.

Tritt ein Sicherheitsfall ein, fällt die Bestromung des Magnetventils 140 aus. Dann schaltet das Magnetventil mittels Federvorspannung in der bereits beschriebenen Weise in eine Position, in der die Leitung 160 vom Stellungsregler zum Magnetventil verblockt wird und die Steuerleitung 170 auf Umgebungsdruck entlüftet. Gleichzeitig wird der Stellungsregler so geschaltet, dass er ebenfalls entlüftet, wodurch auch die Leitung 160 zwischen Stellungsregler und Magnetventil entlüftet wird. In diesem Zustand verfährt nun der Antrieb 130 das Ventilglied in die Sicherheitsstellung. Wäre das Magnetventil defekt und würde nicht entlüften, wäre die Steuerleitung 170 zwischen Antrieb 130 und Stellungsregler 120 nicht unterbrochen. Somit würde der Antrieb über den Stellungsregler entlüftet.

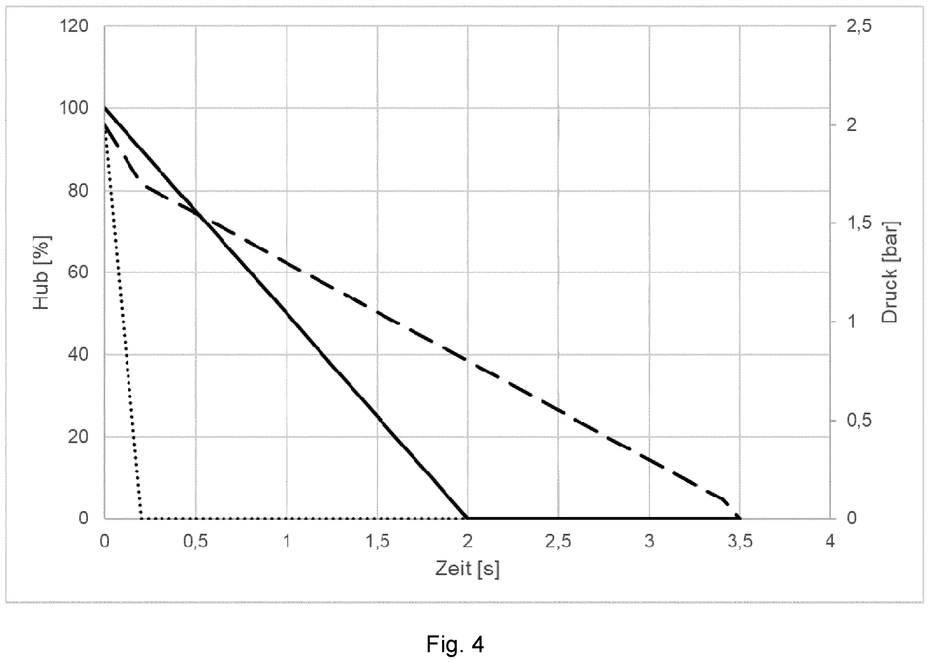

In Fig. 4 ist ein Diagramm zu sehen, welches neben dem Positionsverlauf des Ventilglieds 110 im Sicherheitsfall (durchgezogene Kurve) den Druckverlauf am ersten Drucksensor 190 zeigt, und zwar für den Fall, dass das Magnetventil ordnungsgemäß geschaltet hat (gepunktete Kurve) und für den Fall, dass das Magnetventil nicht funktioniert hat und der Stellungsregler den Antrieb entlüftet hat (gestrichelte Kurve).

Die Unterschiede erklären sich folgendermaßen: Hat das Magnetventil korrekt geschaltet, wird die Steuerleitung 160, 170 am Magnetventil unterbrochen und entlüftet. Das kurze und damit kleinvolumige Leitungsstück 160 zwischen Magnetventil 140 und Stellungsregler 120 wird (durch den Stellungsregler) ebenfalls entlüftet, und zwar aufgrund des geringen Volumens sehr schnell. Dies führt zu der sehr steil abfallenden gepunkteten Kurve in Fig. 4. Hat das Magnetventil nicht korrekt geschaltet, erfolgt das Entlüften des Antriebs 130 über den Stellungsregler 120. Aufgrund des großen Volumens und des in aller Regel geringeren Kvs-Wertes erfolgt der Druckabfall am ersten Drucksensor 190 in diesem Fall deutlich langsamer, in einer Weise, die mit der Bewegung des Ventilantriebs 130 korreliert. Dies ist in Fig. 4 durch die gestrichelte Kurve dargestellt. Über eine Drosselstelle am Stellungsregler stellt sich dabei am Anfang des Vorgangs ein Differenzdruck ein, wodurch es zu dem Knick im Anfangsverlauf der Kurve kommt.

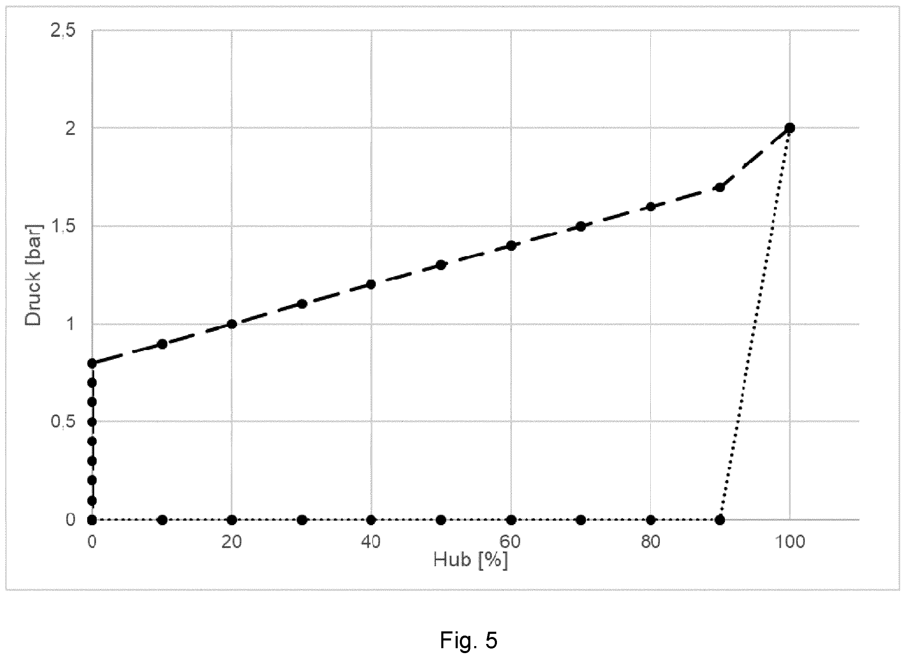

Die der Situation von Fig. 4 entsprechenden Hub-Druck-Kennlinien sind in Fig. 5 dargestellt. Hierbei gilt wiederum die gepunktete Kurve für den Fall, dass das Magnetventil den Antrieb entlüftet hat, während die gestrichelte Kurve für den Fall gilt, dass das Entlüften über den Stellungsregler ablief. Anhand dieser Kurven lassen sich die genannten Fälle leicht unterscheiden. Insbesondere ergibt sich aus dem beobachteten Restdruck bei Erreichen der Hub-Position 0 ein günstiges Unterscheidungskriterium. Hier kann z.B. eine erste Schwelle gewählt werden, die zwischen dem erwarteten Restdruck bei Verfahren des Antriebs in die Sicherheitsstellung mittels Stellungsregler und 0 liegt.

Der dritte mögliche Fall, dass das Magnetventil ordnungsgemäß funktioniert hat, aber der Stellungsregler nicht, wurde nicht dargestellt. In diesem Fall würde das Ventil in die Sicherheitsstellung verfahren, aber der Druck am ersten Drucksensor 190 entspräche weiterhin dem Ausgangsdruck, da der entsprechende Leitungsabschnitt 160 am Magnetventil 140 verblockt wird und durch den Stellungsregler nicht entlüftet wird. Als Unterscheidungskriterium wäre hier eine zweite Schwelle sinnvoll, die zwischen dem Ausgangsdruck und dem erwarteten Restdruck bei Verfahren des Antriebs mittels Stellungsregler liegt.

Noch sicherer wird die Diagnose, wenn ein zweiter Drucksensor 195 vorliegt, der mittels Messleitung 180 den Druck im Antrieb 130 bzw. im Abschnitt 170 der Steuerleitung zwischen Magnetventil 140 und Antrieb 130 misst. Liefert der erste Drucksensor 190 einen sehr schnellen, schlagartigen Druckabfall und der zweite Drucksensor 195 einen kontinuierlichen, so haben alle Komponenten wie vorgesehen funktioniert. Die beiden Sensoren liefern dann völlig unterschiedliche zeitliche Verläufe.

Sind sich die beiden Druckabfallkurven hingegen ähnlich, mit einem gleichmäßigeren, insbesondere nicht schlagartigen Verlauf, so ist davon auszugehen, dass das Magnetventil 140 defekt und der Stellungsregler 120 in Ordnung ist. Der Antrieb wird über den Stellungsregler entlüftet, so dass beide Drucksensoren 190, 195 in etwa dasselbe messen.

Die Gesamtheit aller Möglichkeiten bei Verwendung von zwei Drucksensoren und einem typischen Sicherheitsventil ist in der folgenden Tabelle wiedergegeben.

| | P1 fällt sehr schnell ab | P1 fällt langsam ab | P1 bleibt konstant |
|---|---|---|---|
| P2 fällt zügig ab | - Magnetventil funktionsfähig | N/A | - Magnetventil funktionsfähig |
| | - Stellungsregler funktionsfähig | | - Stellungsregler defekt |
| P2 fällt langsam ab | N / A | - P1 und P2 sind während des Druckabfalls stets gleich | N / A |
| | | - Magnetventil defekt | |
| | | - Stellungsregler funktionsfähig | |
| P2 bleibt konstant | - Das Magnetventil hat geschaltet, aber die nun geschaltete Entlüftungsleitung des Antriebs ist verstopft. | N/A | - Magnetventil defekt |
| | | | - Stellungsregler defekt |
| | - Stellungsregler funktionsfähig | | |

(Dabei bezeichnet:
- P1 den am ersten Drucksensor 190 gemessenen Druck
- P2 den am zweiten Drucksensor 195 gemessenen Druck.)

Ändert sich nun die Position des Ventilgliedes zu langsam oder gar nicht, obwohl die Drucksensoren 190, 195 die erwarteten Kurvenverläufe aufweisen, kann auf eine erhöhte Reibung bzw. Blockade des Ventilantriebs 130, insbesondere des Stellmechanismus, oder einen Defekt des Positionssensors geschlossen werden.

### Glossar

### Fluidischer Antrieb eines Ventils

Man spricht von einem fluidisch angetriebenen Ventil, wenn die Antriebsstange des Ventils von einer Membran bewegt wird, die durch ein Fluid, typischerweise Druckluft, mit Druck beaufschlagt und dadurch positioniert wird.

### Kv-Wert, Kvs-Wert

Der Kv-Wert wird auch als Durchflussfaktor oder als Durchflusskoeffizient bezeichnet. Er ist ein Maß für den erzielbaren Durchsatz einer Flüssigkeit oder eines Gases durch ein Ventil bei gegebenem Öffnungsgrad und dient zur Auswahl und Dimensionierung von Ventilen. Der Wert wird in der Einheit m³/h angegeben und ist als effektiver Querschnitt interpretierbar. Ein Kv-Wert gilt nur für einen zugehörigen Hub bzw. Öffnungsgrad eines Ventils. Der Kv-Wert eines Ventils bei Nennhub (d.h. 100 % Öffnungsgrad) wird als Kvs-Wert bezeichnet. Anhand des Kvs-Wertes kann bei einem Ventil der maximal mögliche Durchsatz ermittelt werden (nach https://de.wikipedia.org/wiki/Kv-Wert).

### Magnetventil

Ein Magnetventil ist ein Ventil mit elektromagnetischem Antrieb. Magnetventile können - abhängig von der Bauart - sehr schnell schalten.

### Sicherheitsventil

Als Sicherheitsventile werden hier Stellarmaturen mit einer Auf/Zu-Arbeitsweise und sicherheitsrelevanter Anwendung bezeichnet. Stellarmaturen bestehen aus einem - typischer-weise fluidischen - Antrieb und einem beweglichen Ventilglied und dienen zum Regulieren eines Fluidstromes. Die Art der Ventile können sowohl Drehventile als auch Hubventile sein. Im Bereich sicherheitsrelevanter Armaturen werden in der Regel einfachwirkende Pneumatikantriebe verwendet. Die von Federkräften einseitig vorgespannten Antriebe verfahren eigenständig in eine sichere Position, wenn der Antrieb entlüftet wird, also die Druckluft aus der Kammer des Antriebes entweicht. Dies geschieht z.B. dann, wenn ein Strom-Druck(l/P)-Wandler oder ein Magnetventil nicht mehr bestromt wird.

Bei Sicherheitsarmaturen ist häufig das Sicherheitsventil im normalen Betrieb offen, und im Sicherheitsfall (z.B. Stromausfall) schließt das Sicherheitsventil eigenständig. Die Druckluft wirkt immer gegen die Federkraft. Entlüftet man nun den Antrieb, beginnt das Ventil sich zu schließen, da die Federkräfte freigesetzt werden. Die Sicherheitsstellung kann auch stromlos offen sein (Antrieb entlüftet) und bestromt geschlossen (Antrieb belüftet). In der Sicherheitsstellung liegt im Antrieb also nur der Umgebungsdruck vor.

### Teilhubtest (Partial Stroke Test, PST)

Um den sicheren Betrieb einer Armatur zu gewährleisten, wird regelmäßig bzw. zyklisch getestet, ob sich das Stellglied auch bewegt. Bei diesen Tests ist es nicht gewünscht, dass die Armatur vollständig in die Sicherheitsstellung verfährt, um den laufenden Betrieb nicht zu stören. Bei einem Teilhubtest wird das Stellglied nur soweit verfahren, wie erforderlich ist, um sicherzustellen, dass das Stellglied einen Teil der Strecke verfährt, ohne den Prozess der Anlage maßgeblich zu beeinflussen. Dabei wird auch getestet, ob sich das Stellglied überhaupt noch von seiner Position löst bzw. losbricht. Das Stellglied fährt nach dem Teilhubtest wieder in seine Ausgangsposition zurück. Mit diesem Test kann die grundlegende Bewegbarkeit des Stellgliedes geprüft werden.

### Ventilglied

Das Ventilglied ist dasjenige Element, das das Ventil schließt, wenn es auf den Ventilsitz gepresst wird.

### Bezugszeichen

- 100: Sicherheitsventil
- 110: eigentliches Ventil; Ventilgehäuse mit Ventilglied
- 120: Stellungsregler
- 130: Ventilantrieb
- 140: Magnetventil
- 150: Druckluftversorgung
- 160: Steuerleitung zwischen Stellungsregler und Magnetventil
- 170: Steuerleitung zwischen Magnetventil und Antrieb
- 180: Messleitung
- 190: erster Drucksensor
- 195: zweiter Drucksensor

### zitierte Literatur

### zitierte Patentliteratur

DE 197 23 650 A1
DE 10 2018 103 324 B3
DE 10 2018 109 865 A1
EP 2 473 889 B1
US 2006/0219299 A1
US 2020/0124063 A1
WO 2009/013205 A1
WO 2018/075321 A1
WO 2018/075241 A1
zitierte Nicht-Patentliteratur
EN 61508

## Patentansprüche

1. Verfahren zum Prüfen der Funktionsfähigkeit eines Sicherheitsventils (100) in einem Sicherheitsfall;
1.1 wobei das Sicherheitsventil (100) ein Ventilglied (110) und zum Positionieren des Ventilglieds (110) einen einfachwirkenden, pneumatischen Antrieb (130) mit einem Antriebsfluid aufweist;
1.2 wobei das Sicherheitsventil (100) einen Stellungsregler (120) aufweist, der den Druck im Antriebsfluid einstellt und dadurch die Position des Ventilglieds (110) steuert und/oder regelt;
1.3 wobei das Ventilglied (110) eine Sicherheitsstellung einnimmt, wenn der Druck im Antriebsfluid einem Umgebungsdruck entspricht;
1.4 wobei ein Magnetventil (140) zwischen dem Antrieb (130) und dem Stellungsregler (120) pneumatisch verschaltet ist und zum Entlüften des Antriebs (130) zur Umgebung hin dient;
1.5 wobei ein erster Drucksensor (190) bereitgestellt wird, der den Druck des Antriebsfluids zwischen dem Stellungsregler (120) und dem Magnetventil (140) misst;
1.6 wobei im Sicherheitsfall sowohl das Magnetventil (140) als auch der Stellungsregler (120) den Antrieb (130) zur Umgebung hin entlüften; wobei das Verfahren die folgenden Schritte umfasst:
1.7 der Sicherheitsfall wird ausgelöst, infolgedessen das Ventilglied (110) in seine Sicherheitsstellung verfahren sollte;
1.8 der Zeitpunkt, an dem das Ventilglied (110) die Sicherheitsstellung eingenommen hat, wird ermittelt;
1.9 zu diesem Zeitpunkt misst der erste Drucksensor (190) einen Restdruck im Antriebsfluid;
1.10 ist der Restdruck höher als eine erste Schwelle oder gleich der ersten Schwelle, dann gilt die Prüfung der Funktionsfähigkeit des Sicherheitsventils (100) als nicht bestanden;
1.11 ist der Restdruck niedriger als die erste Schwelle, dann gilt die Prüfung der Funktionsfähigkeit des Sicherheitsventils (100) als bestanden.

2. Verfahren nach dem vorhergehenden Anspruch,
2.1 wobei im Antrieb (130) des Sicherheitsventils vor dem Sicherheitsfall ein Ausgangsdruck herrscht;
2.2 wobei der Restdruck höher als die erste Schwelle oder gleich der ersten Schwelle ist;
**dadurch gekennzeichnet,**
2.3 dass auf einen Defekt des Magnetventils (140) geschlossen wird, wenn der Restdruck niedriger als eine zweite Schwelle liegt;
2.3.1 wobei die zweite Schwelle größer als die erste Schwelle und kleiner als der Ausgangsdruck ist;
2.4 andernfalls wird auf einen Defekt des Stellungsreglers (120) geschlossen.

3. Verfahren nach einem der beiden vorhergehenden Ansprüche,
**dadurch gekennzeichnet,**
3.1 dass ein Verlauf der Position des Ventilglieds (110) und/oder des Drucks erfasst wird, wodurch eine Positions- und/oder Druck- und/oder Positions-Druck-Kennlinie gebildet wird; und
3.2 dass die erhaltene Kennlinie mit mindestens einer gespeicherten Referenz-Kennlinie verglichen wird.

4. Verfahren nach Anspruch 1 oder 2,
**dadurch gekennzeichnet,**
4.1 dass der zeitliche Verlauf des Drucks und/oder einer ersten und/oder zweiten Ableitung davon nach dem Auslösen des Sicherheitsfalles aufgezeichnet wird; und
4.2 dass der aufgezeichnete zeitliche Verlauf des Drucks und/oder der ersten und/oder zweiten Ableitung davon mit einer vorab gespeicherten Referenz-Kennlinie verglichen wird.

5. Verfahren nach Anspruch 3 oder 4,
**dadurch gekennzeichnet,**
**dass** aus dem Vergleich des aufgezeichneten Verlaufs und/oder der mindestens einen erhaltenen Kennlinie mit der mindestens einen Referenz-Kennlinie Aussagen über die Funktionsfähigkeit von Komponenten des Sicherheitsventils (100) gewonnen werden.

6. Verfahren nach einem der Ansprüche 1 bis 5,
**dadurch gekennzeichnet,**
**dass** ein erstes Zeitintervall bestimmt wird, das der am ersten Drucksensor (190) gemessene Druck benötigt, um auf Atmosphärendruck abzusinken;
**dass** ein zweites Zeitintervall bestimmt wird, das das Ventilglied (110) benötigt, um in die Sicherheitsstellung zu verfahren;
**dass** auf korrektes Funktionieren des Magnetventils (140) geschlossen wird, wenn das erste Zeitintervall kürzer als das zweite Zeitintervall ist.

7. Verfahren nach dem vorhergehenden Anspruch,
**dadurch gekennzeichnet,**
**dass** auf einen Defekt des Magnetventils (140) geschlossen wird, wenn das erste Zeitintervall länger als das zweite Zeitintervall ist.

8. Verfahren nach einem der Ansprüche 1 bis 7,
**dadurch gekennzeichnet,**
**dass** aus einem konstanten Druckverlauf am ersten Drucksensor (190) und gleichzeitig einem kontinuierlichen Positionsverlauf des Ventilglieds (110) auf einen Defekt des Stellungsreglers (120) geschlossen wird.

9. Verfahren nach einem der Ansprüche 1 bis 8,
9.1 wobei ein zweiter Drucksensor (195) bereitgestellt wird, der den Druck des Antriebsfluids zwischen dem Magnetventil (140) und dem Antrieb (130) des Sicherheitsventils (100) misst;
**dadurch gekennzeichnet,**
9.2 dass auf ein korrektes Funktionieren der Komponenten des Sicherheitsventils (100) geschlossen wird, wenn der Druckabfall am ersten Drucksensor (190) schneller verläuft als der Druckabfall am zweiten Drucksensor (195).

10. Verfahren nach einem der Ansprüche 1 bis 9,
10.1 wobei ein zweiter Drucksensor (195) bereitgestellt wird, der den Druck des Antriebsfluids zwischen dem Magnetventil (140) und dem Antrieb (130) des Sicherheitsventils (100) misst;
**dadurch gekennzeichnet,**
10.2 dass auf einen Defekt des Antriebs (130) des Sicherheitsventils (100) geschlossen wird, wenn
10.2.1 der Druckabfall am ersten Drucksensor (190) schneller verläuft als der Druckabfall am zweiten Drucksensor (195) und
10.2.2 die zeitliche Veränderung der Position des Ventilglieds (110) von einer Referenz-Positions-Kennlinie abweicht.

11. Verfahren nach einem der vorhergehenden Ansprüche, wobei die Verfahrensschritte als Programmcode formuliert sind, mit dem das Verfahren auf mindestens einem Computer ablaufen kann.

12. Stellungsregler (120) eines Sicherheitsventils (100), wobei der Stellungsregler (120) Mittel zur Datenaufzeichnung sowie eine Steuerung aufweist, die derart ausgebildet sind, dass der Stellungsregler (120) die Funktionsfähigkeit des Sicherheitsventils (100) und/oder des Magnetventils (140) mithilfe eines Verfahrens nach einem der Verfahrensansprüche 1 bis 11 überprüfen kann.

13. Sicherheitsventil (100) mit einem Stellungsregler (120) nach dem unmittelbar vorhergehenden Anspruch.

14. Prozesstechnische Anlage mit einem Sicherheitsventil (100) nach dem unmittelbar vorhergehenden Anspruch.

15. Computerprogramm, umfassend Befehle, die bewirken, dass der Stellungsregler nach Anspruch 12 die Verfahrensschritte nach einem der Verfahrensansprüche 1 bis 11 ausführt.

16. Computerlesbares Medium, auf dem das Computerprogramm nach dem unmittelbar vorhergehenden Anspruch gespeichert ist.

## Claims

1. Method for testing the operability of a safety valve (100) in a safety case;
1.1 wherein the safety valve (100) has a valve member (110) and, for positioning the valve member (110), a single-acting pneumatic actuator (130) with a drive fluid;
1.2 wherein the safety valve (100) has a positioner (120) which adjusts the pressure in the drive fluid and thereby controls and/or regulates the position of the valve member (110);
1.3 wherein the valve member (110) assumes a safety position when the pressure in the drive fluid corresponds to an ambient pressure;
1.4 wherein a solenoid valve (140) is pneumatically connected between the actuator (130) and the positioner (120) and is used to vent the actuator (130) to ambient;
1.5 wherein a first pressure sensor (190) is provided that measures the pressure of the drive fluid between the positioner (120) and the solenoid valve (140);
1.6 wherein, in the event of a safety case, both the solenoid valve (140) and the positioner (120) vent the actuator (130) to ambient;
wherein the method comprises the following steps:
1.7 the safety case is triggered, as a result of which the valve member (110) should move to its safety position;
1.8 the point in time at which the valve member (110) has assumed the safety position is determined;
1.9 at this point in time, the first pressure sensor (190) measures a residual pressure in the drive fluid;
1.10 if the residual pressure is higher than or equal to a first threshold, then the test of the operability of the safety valve (100) is considered failed;
1.11 if the residual pressure is lower than the first threshold, then the test of the operability of the safety valve (100) is considered passed.

2. Method according to the preceding claim,
2.1 wherein an original pressure occurs in the actuator (130) of the safety valve prior to the safety event;
2.2 wherein the residual pressure is higher than or equal to the first threshold;
**characterized in that**
2.3 a defect in the solenoid valve (140) is concluded if the residual pressure is lower than a second threshold;
2.3.1 wherein the second threshold is greater than the first threshold and less than the original pressure;
2.4 otherwise, a defect of the positioner (120) is concluded.

3. Method according to one of the two preceding claims,
**characterized in that**
3.1 a course of the position of the valve member (110) and/or of the pressure is recorded, whereby a position and/or pressure and/or position-pressure characteristic curve is formed; and
3.2 that the obtained characteristic curve is compared to at least one stored reference characteristic curve.

4. Method according to claim 1 or 2,
**characterized in that**
4.1 that the course of the pressure and/or a first and/or second derivative thereof over time is recorded after the triggering of the safety case; and
4.2 that the recorded course of the pressure and/or the first and/or second derivative thereof over time is compared with a previously stored reference characteristic.

5. Method according to claim 3 or 4,
**characterized in that**
that statements about the operability of components of the safety valve (100) are obtained from the comparison of the recorded course and/or the at least one obtained characteristic curve with the at least one reference characteristic curve.

6. Method according to any one of claims 1 to 5,
**characterized in that**
a first time interval is determined which the pressure measured at the first pressure sensor (190) requires to drop to atmospheric pressure;
a second time interval is determined which the valve member (110) requires to move into the safety position;
it is concluded that the solenoid valve (140) is functioning correctly if the first time interval is shorter than the second time interval.

7. Method according to the preceding claim,
**characterized in that**
a defect of the solenoid valve (140) is concluded if the first time interval is longer than the second time interval.

8. Method according to any one of claims 1 to 7,
**characterized in that**
a defect of the positioner (120) is concluded from a constant pressure curve at the first pressure sensor (190) and simultaneously a continuous position curve of the valve member (110).

9. Method according to any one of claims 1 to 8,
9.1 wherein a second pressure sensor (195) is provided that measures the pressure of the drive fluid between the solenoid valve (140) and the actuator (130) of the safety valve (100);
**characterized in that**
9.2 a correct functioning of the components of the safety valve (100) is concluded if the pressure drop at the first pressure sensor (190) is faster than the pressure drop at the second pressure sensor (195).

10. Method according to any one of claims 1 to 9,
10.1 wherein a second pressure sensor (195) is provided that measures the pressure of the drive fluid between the solenoid valve (140) and the actuator (130) of the safety valve (100);
**characterized in that**
10.2 a defect of the actuator (130) of the safety valve (100) is concluded if
10.2.1 the pressure drop at the first pressure sensor (190) is faster than the pressure drop at the second pressure sensor (195) and
10.2.2 the change in position of the valve member (110) over time deviates from a reference position characteristic curve.

11. Method according to any one of the preceding claims, wherein the method steps are formulated as program code with which the method can run on at least one computer.

12. Positioner (120) of a safety valve (100), the positioner (120) having means for data recording and a controller, which are embodied such that the positioner (120) is able to check the operability of the safety valve (100) and/or the solenoid valve (140) with the aid of a method according to one of the method claims 1 to 11.

13. Safety valve (100) having a positioner (120) according to the immediately preceding claim.

14. Process plant having a safety valve (100) according to the immediately preceding claim.

15. Computer program comprising instructions which cause the positioner according to claim 12 to execute the method steps according to any one of method claims 1 to 11.

16. Computer-readable medium on which the computer program according to the immediately preceding claim is stored.

## Revendications

1. Procédé de contrôle du bon fonctionnement d'une soupape de sécurité (100) dans un cas de sécurité ;
1.1 dans lequel la soupape de sécurité (100) comprend un élément de soupape (110) et, pour positionner l'élément de soupape (110), un entraînement pneumatique à simple effet (130) avec un fluide d'entraînement ;
1.2 dans lequel la soupape de sécurité (100) comprend un régulateur de position (120) qui règle la pression dans le fluide d'entraînement et commande et/ou régule ainsi la position de l'élément de soupape (110) ;
1.3 dans lequel l'élément de soupape (110) prend une position de sécurité lorsque la pression dans le fluide d'entraînement correspond à une pression ambiante ;
1.4 dans lequel une électrovanne (140) est connectée pneumatiquement entre l'entraînement (130) et le régulateur de position (120) et sert à purger l'entraînement (130) vers l'environnement ;
1.5 dans lequel un premier capteur de pression (190) est prévu pour mesurer la pression du fluide d'entraînement entre le positionneur (120) et l'électrovanne (140) ;
1.6 dans lequel, en cas de sécurité, tant l'électrovanne (140) que le positionneur (120) purgent l'entraînement (130) vers l'environnement ;
dans lequel le procédé comprend les étapes suivantes :
1.7 le cas de sécurité est déclenché, en conséquence de quoi l'élément de soupape (110) doit se déplacer vers sa position de sécurité ;
1.8 on détermine le moment où l'élément de soupape (110) a pris la position de sécurité;
1.9 à cet instant, le premier capteur de pression (190) mesure une pression résiduelle dans le fluide d'entraînement ;
1.10 si la pression résiduelle est supérieure ou égale à un premier seuil, le contrôle du bon fonctionnement de la soupape de sécurité (100) est considéré comme un échec ;
1.11 si la pression résiduelle est inférieure à un premier seuil, le contrôle du bon fonctionnement de la soupape de sécurité (100) est considéré comme réussi.

2. Procédé selon la revendication précédente,
2.1 dans lequel une pression de sortie règne dans l'entraînement (130) de la soupape de sécurité avant le cas de sécurité ;
2.2 dans lequel la pression résiduelle est supérieure ou égale au premier seuil ;
**caractérisé en ce que**
2.3 on conclut à un défaut de l'électrovanne (140) lorsque la pression résiduelle est inférieure à un deuxième seuil ;
2.3.1 dans lequel le deuxième seuil est supérieur au premier seuil et inférieur à la pression de sortie ;
2.4 dans le cas contraire, on conclut à un défaut du positionneur (120).

3. Procédé selon l'une des deux revendications précédentes,
**caractérisé en ce que**
3.1 on détecte une évolution de la position de l'élément de soupape (110) et/ou de la pression, ce qui permet de former une courbe caractéristique de position et/ou de pression et/ou de position-pression ; et
3.2 on compare la courbe caractéristique obtenue avec au moins une courbe caractéristique de référence mémorisée.

4. Procédé selon la revendication 1 ou 2,
**caractérisé en ce que**
4.1 l'évolution temporelle de la pression et/ou d'une première et/ou d'une deuxième dérivée de celle-ci est enregistrée après le déclenchement du cas de sécurité ; et
4.2 l'évolution temporelle enregistrée de la pression et/ou de la première et/ou de la deuxième dérivée de celle-ci est comparée à une courbe caractéristique de référence préalablement mémorisée.

5. Procédé selon la revendication 3 ou 4,
**caractérisé en ce que**
la comparaison de l'évolution enregistrée et/ou de la au moins une courbe caractéristique obtenue avec la au moins une courbe caractéristique de référence permet d'obtenir des informations sur le bon fonctionnement des composants de la soupape de sécurité (100).

6. Procédé selon l'une des revendications 1 à 5,
**caractérisé en ce que**
on détermine un premier intervalle de temps que la pression mesurée sur le premier capteur de pression (190) met pour descendre à la pression atmosphérique ;
on détermine un deuxième intervalle de temps nécessaire à l'élément de soupape (110) pour se déplacer vers la position de sécurité ;
on conclut au bon fonctionnement de l'électrovanne (140) si le premier intervalle de temps est plus court que le deuxième intervalle de temps.

7. Procédé selon la revendication précédente,
**caractérisé en ce que**
on conclut à un défaut de l'électrovanne (140) si le premier intervalle de temps est plus long que le deuxième intervalle de temps.

8. Procédé selon l'une quelconque des revendications 1 à 7,
**caractérisé en ce que**
on conclut à un défaut du positionneur (120) à partir d'une évolution constante de la pression au niveau du premier capteur de pression (190) et simultanément d'une évolution continue de la position de l'élément de soupape (110).

9. Procédé selon l'une des revendications 1 à 8,
9.1 dans lequel on prévoit un deuxième capteur de pression (195) qui mesure la pression du fluide d'entraînement entre l'électrovanne (140) et l'entraînement (130) de la soupape de sécurité (100) ;
**caractérisé en ce que**
9.2 on conclut à un fonctionnement correct des composants de la soupape de sécurité (100) si la chute de pression au niveau du premier capteur de pression (190) est plus rapide que la chute de pression au niveau du deuxième capteur de pression (195).

10. Procédé selon l'une quelconque des revendications 1 à 9,
10.1 dans lequel on prévoit un deuxième capteur de pression (195) qui mesure la pression du fluide d'entraînement entre l'électrovanne (140) et l'entraînement (130) de la soupape de sécurité (100) ;
**caractérisé en ce que**
10.2 on conclut à un défaut de l'entraînement (130) de la soupape de sécurité (100) lorsque
10.2.1 la chute de pression au niveau du premier capteur de pression (190) est plus rapide que la chute de pression au niveau du deuxième capteur de pression (195), et que
10.2.2 la variation dans le temps de la position de l'élément de soupape (110) s'écarte d'une caractéristique de position de référence.

11. Procédé selon l'une quelconque des revendications précédentes, dans lequel les étapes du procédé sont formulées sous la forme d'un code de programme permettant de mettre en œuvre le procédé sur au moins un ordinateur.

12. Positionneur (120) d'une soupape de sécurité (100), dans lequel le positionneur (120) comprend des moyens d'enregistrement de données ainsi qu'une commande, qui sont conçus de telle sorte que le positionneur (120) peut vérifier le bon fonctionnement de la soupape de sécurité (100) et/ou de l'électrovanne (140) à l'aide d'un procédé selon l'une des revendications de procédé 1 à 11.

13. Soupape de sécurité (100) avec un positionneur (120) selon la revendication immédiatement précédente.

14. Installation de traitement avec une soupape de sécurité (100) selon la revendication précédente.

15. Programme d'ordinateur comprenant des instructions qui amènent le positionneur selon la revendication 12 à exécuter les étapes de procédé selon l'une des revendications de procédé 1 à 11.

16. Support lisible par ordinateur sur lequel est enregistré le programme d'ordinateur selon la revendication immédiatement précédente.
